Europäisches Patentamt

(19) **European Patent Office**

**Office européen des brevets**

(11) Numéro de publication: **0 043 769**
**B1**

# (12) FASCICULE DE BREVET EUROPEEN

(45) Date de publication du fascicule du brevet:
01.02.84

(51) Int. Cl.³: **B 23 K 11/24**

(21) Numéro de dépôt: **81401064.1**

(22) Date de dépôt: **02.07.81**

(54) **Temporisateur à mémoire, notamment pour poste de soudure.**

(30) Priorité: **03.07.80 FR 8014789**

(43) Date de publication de la demande:
**13.01.82 Bulletin 82/2**

(45) Mention de la délivrance du brevet:
**01.02.84 Bulletin 84/5**

(84) Etats contractants désignés:
**BE CH DE GB IT LI SE**

(56) Documents cités:
**FR - A - 1 099 322**
**FR - A - 2 331 413**
**FR - A - 2 432 912**
**FR - A - 2 457 736**

**IEEE TRANSACTIONS ON INDUSTRIAL ELECTRONICS
AND CONTROL INSTRUMENTATION, vol. IECI-25, no. 1,
février 1978 NEW YORK (US) J.A. HEISEL et al.:
"Microcomputer-controlled resistance welder" pages
14-16**

(73) Titulaire: **REGIE NATIONALE DES USINES RENAULT,
Boîte postale 103 8-10 avenue Emile Zola,
F-92109 Boulogne-Billancourt (FR)**

(72) Inventeur: **Baville, Jacky, 27, rue A. de St Eaupery,
F-76700 Harfleur (FR)**

(74) Mandataire: **Srour, Elie et al, 8 & 10 Avenue Emile Zola,
F-92109 Boulogne Billancourt (FR)**

Temporisateur à mémoire, notamment pour poste de soudure

La présente invention est relative à un temporisateur à mémoire utilisable notamment pour un poste de soudure électrique par point tel qu'on en utilise par exemple dans le domaine de la construction automobile ou dans l'électroménager.

Sur les temporisateurs actuellement en service, les dispositifs de réglage des paramètres sont accessibles en façade. L'opérateur du poste à souder peut à son gré, intervenir sur les réglages affichés, afin de diminuer le temps de cycle machine, ceci au détriment de la qualité des points soudés. Un talon de réglage minimum a été fixé à six périodes du secteurs 50 Hz sur les temps: ACCOSTAGE — SOUDURE — MAINTIEN. Cette solution ne répond que partiellement au problème du maintien des paramètres nécessaires à une bonne soudure.

Le document IEEE TRANSACTIONS ON INDUSTRIAL ELECTRONICS AND CONTROL INSTRUMENTATION, volume, IECI-25, numéro 1, février 1978, NEW YORK (US), J. A. HEISEL et al., »Microcomputer-controlled resistance welder«, pages 14—16, qui a servi à délimiter la revendication 1, décrit un poste de soudage électronique avec un temporisateur équipé d'une carte électronique permettant l'adaptation d'une commande de soudeuse comportant une mémoire (6800) dans laquelle on charge les valeurs des paramètres relatifs à une opération de soudure par l'intermédiaire d'un boitier de réglage.

Par ailleurs, le remplacement des électrodes sur les pinces de soudure est pratiqué de façon irrégulière sans tenir compte du nombre de points de soudure effectués. La qualité de la soudure varie avec l'état d'usure des électrodes. Aucune solution n'a encore été appliquée à ce jour pour remédier à cet état de fait.

Enfin l'affichage du courant de soudure ne tient pas compte de l'usure progressive des électrodes. Le réajustement de ce réglage n'est effectué qu'après un contrôle destructif non satisfaisant sur une pièce prélevée de temps en temps sur un lot. Entre deux contrôles, un certain nombre de mauvaises pièces ont pu voir le jour. La présente invention permet d'éviter ces inconvénients.

L'invention concerne un temporisateur équipé d'une carte électronique permettant l'adaptation d'une commande de soudeuse, comportant une mémoire dans laquelle on charge les valeurs des paramètres relatifs à une opération de soudure par l'intermédiaire d'un boitier de réglage remarquable en ce que ledit boitier de réglage est branché temporairement sur le temporisateur et en ce qu'à cette mémoire est associé un compteur mémorisé de points de soudure en position »comptage« lors du chargement des paramètres puis en position »décomptage« s'effectuant à partir du pas de soudure correspondant aux nombres de soudures acceptables pour l'électrode du fait de son usure.

Suivant une caractéristique de réalisation, les paramètres d'une opération de soudure sont les temps d'accostage, de soudure, de maintien, le temps mort et l la valeur du talon c'est à dire la valeur du nombre de points de soudure autorisés.

Suivant une caractéristique préférée, le décomptage du talon commande l'allumage d'un voyant appelant un changement d'électrodes.

Avantageusement, le temporisateur est équipé de moyens permettant d'agir sur la lecture en sortie du compteur avec possibilité d'interdiction de fonctionnement.

Suivant une autre caractéristique préférée de réalisation, le temporisateur est équipé en sortie du compteur de moyens de sélection de diverses valeurs de talon permettant une variation automatique et incrimentielle de l'intensité du courant de soudure.

Suivant une troisième caractéristique de réalisation, le boîtier de réglage branché temporairement comporte des roues codeuses sur lesquelles on affiche préalablement la valeur du talon à introduire dans la mémoire du temporisateur, un ensemble de boutons-poussoirs de commande de chargement, une visualisation des temps contenus dans la mémoire du temporisateur et un commutateur de sélection du pas à visualiser.

D'autres caractéristiques ressortiront de la description qui suit et qui n'est donnée qu'à titre d'exemple. A cet effet on se reportera aux dessins joints dans lesquels:

— la figure 1 illustre de manière schématique un mode de réalisation d'un temporisateur à mémoire suivant la présente invention et d'un boîtier d'insertion de paramètres;

— la figure 2 illustre un mode de réalisation détaillé du temporisateur à mémoire de la figure 1 avec son comptage pas à pas et sa mémorisation des réglages;

— la figure 3 illustre le compteur de points de soudure disposé à l'intérieur du temporisateur à mémoire de la figure 1;

— la figure 4 illustre un mode de réalisation d'un boîtir de réglage suivant la figure 1; et,

— la figure 5 illustre de manière schématique une variante permettant une variation automatique du courant de soudure.

Les mêmes références numériques désignent les mêmes éléments sur les différentes figures.

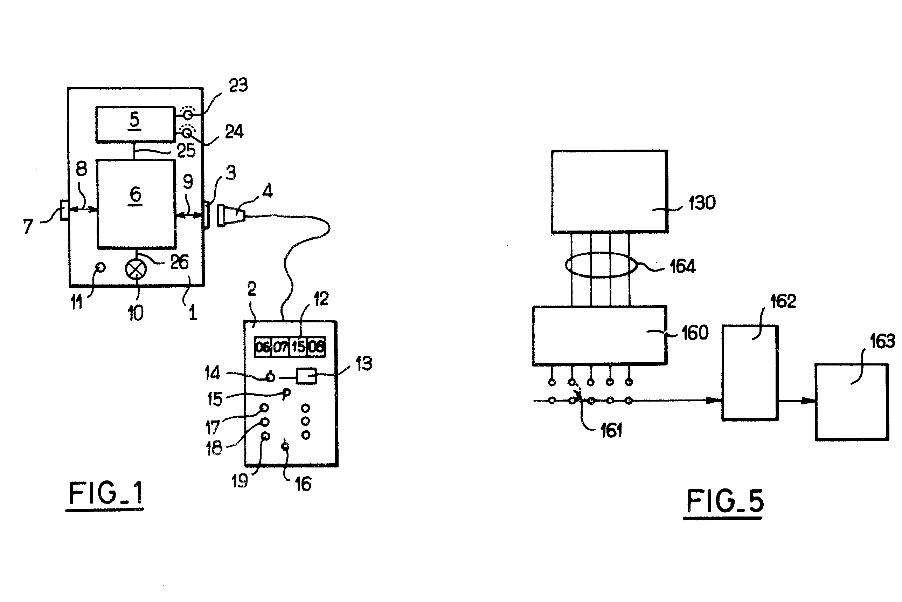

A la figure 1 on a représenté de façon schématique un temporisateur à mémoire 1 suivant l'invention et un boîtir de réglage 2, ce dernier pouvant être connecté au temporisateur au moyen d'un connecteur 3, 4. Le temporisateur à mémoire 1 comprend une électronique existante 5 comportant les alimentations, les circuits de déphasage, de contrôle de la température de l'eau et de commande de fermeture des électrodes du poste de soudure (commande EV). A cette électronique existante 5 sont associés deux potentiomètres 23 et 24 en entrées permettant respectivement le réglage manuel de l'intensité du courant de soudure et le temps du premier accostage. Ces deux potentiomètres sont disposés sur la face avant du boîtir renfermant le temporisateur à mémoire 1. Suivant la présente invention, le temporisateur 1 est muni d'éléments électroniques nouveaux 6 comportant des mémoires dans lesquelles on peut enregistrer à l'aide du boîtier d'entretien 2 les paramètres d'une opération de soudure et un compteur mémorisé de points de soudure décrémenté au fur et à mesure qu'ils sont exécutés. Les éléments électroniques nouveaux 6 sont raccordés en 9 par un ensemble de conducteurs au connecteur 3, 4, en 25 à l'électronique existante 5, en 8 par un ensemble de conducteurs à un connecteur 7 permettant de raccorder le temporisateur à mémoire 1 au poste à pinces de soudure commandé par une ou deux pédales, et enfin en 26 à une visualisation de changement d'électrodes qui clignote par exemple quand restent mille points de soudure autorisés pour attirer l'attention de l'opérateur et fonctionne en continu à zéro avec ou sans arrêt du poste. Enfin un interrupteur 11 permet de se brancher soit en mode coup par coup soit en mode à la volée en ce qui concerne le mode de fonctionnement du poste.

Passant à la description du boîtier 2, celui-ci comporte un ensemble de huit roues codeuses 12 sur lesquelles on affiche au préalable la valeur du talon à introduire dans la mémoire du temporisateur 1, un ensemble 17, 18, 19, de boutons-poussoirs de commande de chargement à savoir: 17: RAZ; 18: chargement; 19: enregistrement. Ces trois boutons agissant, selon la position du commutateur 15, soit pour l'insertion des paramètres soit pour introduire le nombre de points ou talon. Les paramètres sont visualisés en 13 poste relié à un sélectionneur de visualisation 14 à quatre positions:

AC: Accostage
SD: Soudure
MT: Maintien
TM: Temps mort

Un commutateur 16 à deux positions permet de sélectionner soit la marche, soit l'arrêt.

A propos de ce dispositif on peut faire les remarques suivantes:

- Dans la version représentée, seuls deux réglages restent accessibles à l'opérateur: premier accostage par 24 et le réglage de l'intensité du courant de soudure par 23. Tous les autres paramètres: ACCOSTAGE; SOUDURE; MAINTIEN; TEMPS MORT sont contenus dans la mémoire interne 6 du temporisateur 1.
- L'accès aux paramètres ne peut se faire qu'avec le boîtier de réglage portatif 2 détenu seulement par le service compétent.

Ce boîtir n'est relié au temporisateur 1 que pendant l'opération d'enregistrement des paramètres. Les temps contenus en mémoire sont lisibles grâce à ce même boîtir; deux afficheurs, sept segments 13 sont prévus à cet effet; un commutateur 14 permet la sélection du pas à visualiser.

- Reprenant le principe appliqué aux paramètres, une mémoire interne 6 au temporisateur 1 contient un talon à décompter représentant le nombre de points maximum exécutables par les électrodes en fontion de leur utilisation.
- Ce nombre, entre 0 et 9999, est introduit aussi avec le boîtier de réglage 2; chaque point soudé est ensuite décompté au talon. A 1000 points du zéro, (valeur modifiable) le voyant 10 clignote en permanence permettant une rapide sélection visuelle des électrodes à changer.
- Lorsque le décomptage des points effectués arrive à zéro = le voyant 10 reste allumé en permanence et le poste à souder est bloqué dans son fonctionnement. Seul un nouveau chargement du talon en mémoire permet la remise en service du poste. Il est possible d'utiliser seulement la visualisation ou d'appliquer une autre pénalisation.

Les principaux avantages obtenus avec le temporisateur à mémoire de l'invention sont une stabilité des paramètres affichés et une régularité de l'échange des électrodes adaptée à la pièce à souder donc en définitive une grande amélioration dans la qualité des soudures obtenues.

Le temporisateur permet le comptage synchrone des quatre temps: AC; SD; MT et TM qui ont été définis ci-dessus. La version décrite et représentée sur les dessins est constituée d'une carte électronique permettant l'adaptation d'une commande de soudure pour obtenir les caractéristiques suivantes:

- suppression des réglages accessibles en façade du temporisateur;
- comptage mémorisé avec alarme des points de soudure effectués;
- utilisation d'un boîtier de réglage portatif.

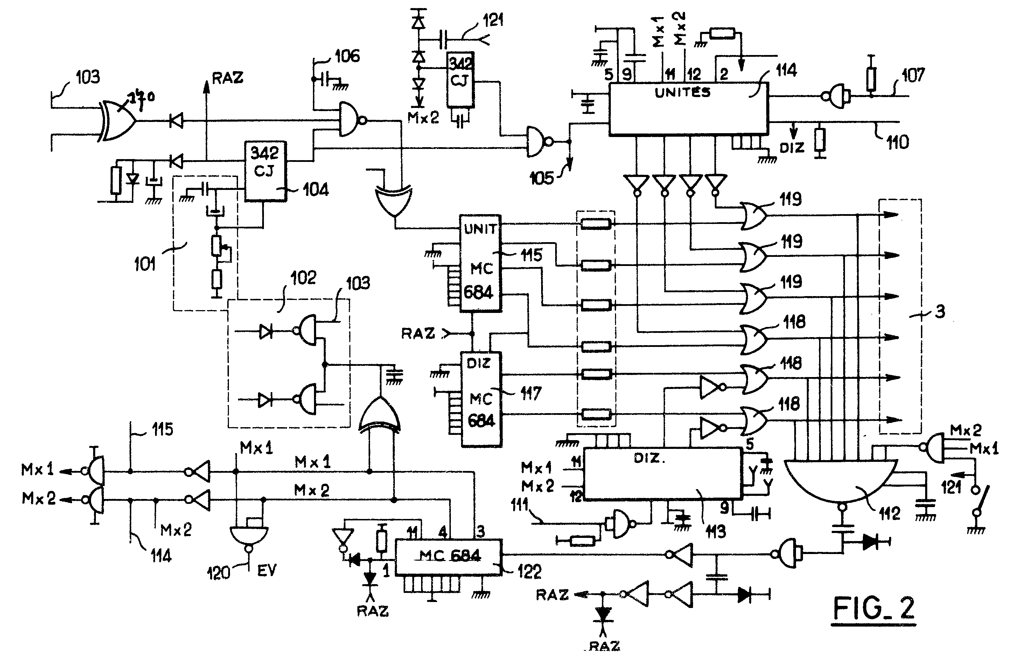

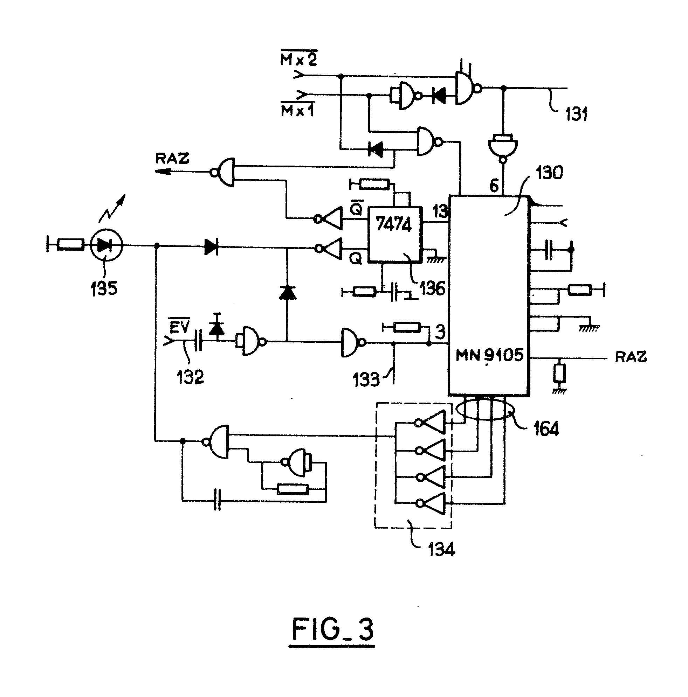

Le système illustré aux figures 2 et 3 ci-après utilisé des circuits MOS MN 9 105 de PLESSEY SEMICONDUCTORS comprenant un compteur à quatre décades associé à une mémoire le tout intégré dans le même composant. Chaque décade présente son contenu sur quatre chiffres binaires de sortie lorsque ladite sortie est validée par multiplexage.

La figure 2 illustre dans le temporisateur à mémoire un mode de réalisation du comptage pas à pas et de la mémorisation des réglages tandis que la figure 3 illustre un mode de réalisation du compteur de points de soudure.

En se reportant à la figure 2, les mémoires utilisées MN 9 105 permettent une sauvegarde des données de longue durée. Le mode de réalisation illustré comprend une mémoire des unités 114 et une mémoire des dizaines 113. La réserve d'énergie sauvegardant les données est constituée par un condensateur aux broches 5 et 9. A l'aide du boîtier de réglage 2 un RAZ (retour à zéro) est exécuté en plaçant un niveau haut sur la broche 02. Les paramètres sont introduits en série par les entrées 107 et 111 dans les mémoires des unités 114 et des dizaines 113 sous la forme d'un train d'impulsions chargeant les compteurs de chaque mémoire. Un niveau bas sur l'entrée 110 transfère le contenu des comteurs dans la mémoire 113, 114. Les mémoires unités 114 et dizaines 113 sont chargées simultanément. Au repos le RAZ général est actif. Le multiplexage est en position $M \times 1 = 0$ et $M \times 2 = 0$ aux points indiqués sur les figures 2 et 3. Le circuit 101 permet le réglage du premier accostage. Au repos, sur la sortie mémoire est présente la décade contenant la valeur de l'accostage.

A la commande pédale: $P_1A = 1$ à l'entrée 103 du circuit 170, le monostable 104 type 342 CJ, compte le premier accostage. Dans le même temps un rappel du contenu des mémoires par la sortie 105 est effectué. Après le temps du premier accostage, le signal 50 Hz peut accéder aux compteurs 115, 117 à partir de l'entrée 106.

Lorsque les compteurs 115, 117 atteignent la valeur présentée par les mémoires 113, 114, les portes logiques 118 et 119 à fonction OU autorisent via la porte logique 112 à fonction NON-ET, l'avance pas à pas et la remise à zéro des compteurs.

Le compteur pas à pas 122 à circuit intégré place le multiplexage $M \times 1 = 1$, $M \times 2 = 0$.

La décade représentant le temps de soudure est présentée sur les broches de la sortie mémoire. Le cycle se poursuit jusqu'au TEMPS MORT où le circuit intégré 122 se place de nouveau en AC (accostage) après un RAZ sur sa broche 1 provoqué par le pas 4 (Temps mort terminé).

Durant le »temps mort«, une information $\overline{EV}$ est envoyée vers l'électronique existante par un conducteur 120 provoquant l'ouverture des électrodes de la pince de soudure.

La commande de pédale par le circuit 102 est verrouillée en SOUDURE et MAINTIEN.

Un commutateur Volée/coup par coup raccordé au conducteur d'entrée 121, sélectionne le mode de fonctionnement et permet lors de la visualisation des réglages le rappel du contenu des mémoires 113, 114. En coup par coup le pas TEMPS MORT bloque la commande d'avance pas à pas. L'opérateur doit relâcher la pédale provoquant ainsi un RAZ autorisant un autre cycle.

Le rafraîchissement du contenu des compteurs 115, 117 de chaque mémoire s'effectue:

— à chaque premier accostage dans le mode coup par coup,
— à chaque accostage dans le mode en volée.

Sur le schéma de la figure 2, seule la partie commande et verrouillage 102, double pédale est représentée. Dans ce cas de la double pédale il conviendrait de prévoir le double des mémoires 113, 114 avec un circuit d'aiguillage pour le chargement.

On peut résumer la table de vérité du compteur pas à pas 122 sous la forme suivante:

| M × 1 | M × 2 | PAS |
|-------|-------|-----|
| 0 | 0 | AC |
| 1 | 0 | SD |
| 0 | 1 | MT |
| 1 | 1 | TM |

On passe à présent à la figure 3 représentant un mode de réalisation détaillé du compteur de points de soudure exécutés.

Le chargement du talon correspondant au nombre de points de soudure utilise le même principe que pour les paramètres.

Au repos, les compteurs de la mémoire 130 sont en position »comptage« afin de permettre le chargement du talon. A partir du pas »Soudure«, les décades sont en position »décomptage«.

Al la reconnaissance du pas »soudure«, l'entrée »horloge« sollicite la broche 6 du compteur 130, une opération »moins un« est exécutée sur le contenu des compteurs, une commande $\overline{EV}$ par le conducteur d'entrée 132 transmet au »temps mort« une impulsion d'enregistrement sur la broche 3. La nouvelle valeur »talon moins un« est mémorisée en 130. Le circuit de sortie 134 met en fonctionnement le clignotant 135 pour un talon inférieur à mille points. Lorsque le talon arrive à zéro, la broche 13 »report« des compteurs 130 permet la mémorisation de cet état par une bascule 136 de type 7474. La sortie inverseuse Q de cette bascule bloque le poste de travail par un RAZ, tandis que sa sortie non inverseuse Q bloque l'enregistrement du zéro et commande l'allumage permanent du voyant 135.

Le réarmement s'effectue par une mise hors tension du poste. Il est nécessaire de garder »un« au talon en mémoire pour éviter le passage en débordement des compteurs 130 après réarmement. Un seul point de soudure peut être effectué après un réarmement. Il y a nécessité de charger le nouveau talon si l'on veut pouvoir effectuer une nouvelle série d'opérations de soudure.

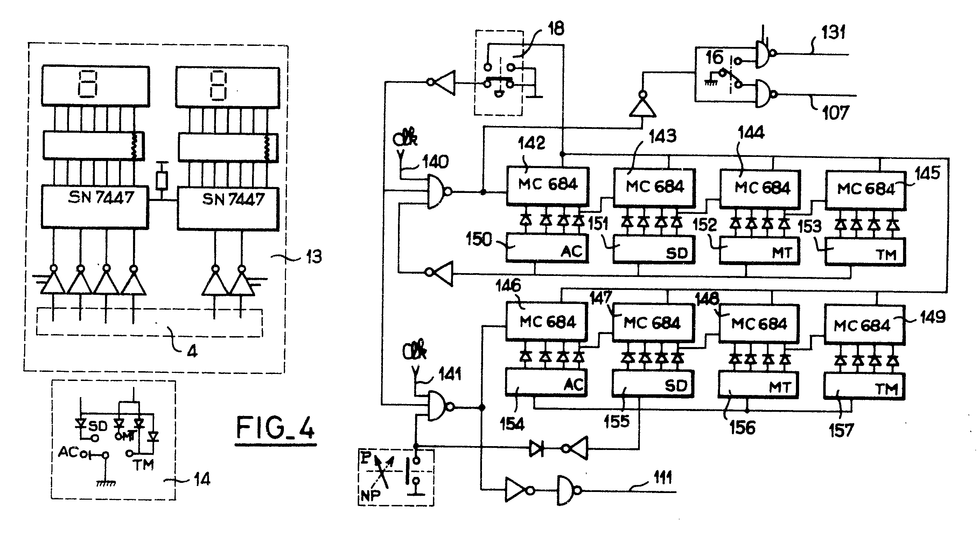

La figure 4 illustre un mode de réalisation détaillé d'un boîtier de réglage pouvant être utilisé en association avec le temporisateur à mémoire des figures 2 et 3.

Après enfoncement d'un bouton, une horloge reliée aux conducteurs d'entrée 140, 141 fait évoluer une série de compteurs. Parallèlement, le même nombre d'impulsions part vers les mémoires, 142 à 145 pour les unités et 146 à 149 pour les dizaines. Lorsque le contenu des compteurs correspond à l'affichage des roues codeusses, 150 à 153 pour les unités, 154 à 157 pour les dizaines, le chargement est arrêté.

A la gauche de la figure 4 on a représenté en haut le cas de deux afficheurs à sept segments en 13 et en bas le commutateur de sélection de visualisation 14 illustrant le cas de quatre positions correspondant aux pas successifs: AC; SD; MT et TM. On a représenté en 16 le commutateur paramètres-nombre de points et en 18 le bouton-poussoir de chargement correspondant aux positions 18 de la figure 1.

Le fonctionnement de ce boîtier est évident. On branche tout d'abord le boîtier sur le temporisateur par l'intermédiaire du connecteur 3–4. On place le commutateur 16 sur la position »paramètres«. On affiche successivement la valeur de chacun des paramètres sur les roues codeuses. On appuie à chaque fois dans l'ordre sur les boutons: RAZ; CHARGEMENT (voyant); ENREGISTREMENT. Le système de visualisation des paramètres 13, 14 permet de s'assurer que les valeurs correctes ont été enregistrées dans les mémoires du temporisateur.

Une seule manœuvre est nécessaire pour charger les quatre temps des paramètres; le commutateur 16 permet de passer à l'introduction du talon. La manœuvre est identique. Le nombre de points est lisible sur les molettes unités du boîtier.

Lorsqu'un service dit de »production« est chargé des changements d'électrodes, un boîtier ne permettant l'accès qu'au talon-nombre de points est réalisable. Sur la façade dudit boîtier apparaissent seulement dans ce cas: quatre roues codeuses permettant l'affichage du nombre de points et trois boutons-poussoirs: RAZ – chargement, enregistrement.

La figure 5 illustre de manière schématique une variante de réalisation permettant d'introduire une variation automatique du courant de soudure.

Sur les conducteurs de sortie 164 de la mémoire du nombre de points comprise à l'intérieur de l'élément 130 apparaissant déjà à la figure 3, on dispose un convertisseur binaire/décimal 160 sachant que le comtage du nombre de points apparaît en code binaire sur l'ensemble des quatre conducteurs 164. A la sortie du convertisseur binaire/décimal 160 on insère un système 161 de lecture et de traitement du contenu de la mémoire »nombre de points exécutés« permettant de sélectionner de façon séquentielle plusieurs valeurs. La sortie du système 161 est connectée à une bascule 162 de mémorisation du passage du talon reliée elle-même à un système de commande 163 de l'intensité du courant de soudure. De cette manière l'intensité du courant de soudure peut être augmentée par paliers successifs, en fonction de l'usure des électrodes, déterminés par le nombre de points exécutés.

**Revendications**

1. Temporisateur équipé d'une carte électronique (5) permettant l'adaptation d'une commande de soudeuse comportant une mémoire (6) dans laquelle on charge les valeurs des paramètres relatifs à une opération de soudure par l'intermédiaire d'un boitier de règlage (2) caractérisé en ce que ledit boitier de règlage est branché temporairement sur le temporisateur (1) et en ce qu'à cette mémoire (6) est associé un compteur mémorisé de points de soudure en position »comptage« lors du chargement des paramètres puis en position »décomptage« s'effectuant à partir du pas de soudure correspondant aux nombres de soudures acceptables pour l'électrode du fait de son usure.

2. Temporisateur suivant la revendication 1, caractérisé en ce que les paramètres d'une opération de soudure sont: accostage; temps de soudure; temps de maintien; temps mort; valeur du talon.

3. Temporisateur suivant la revendication 2, caractérisé en ce que le comptage du talon commande l'allumage d'un voyant (135) appelant un changement d'électrodes ou une information vers un système choisi de traitement.

4. Temporisateur suivant la revendication 3, caractérisé en ce qu'il est équipé de moyens permettant la lecture en sortie du compteur.

5. Temporisateur suivant la revendication 4, caractérisé en ce qu'en sortie du compteur (130), il est équipé de moyens de sélection (160, 161) de diverses valeurs de talon permettant une variation automatique de l'intensité du courant de soudure.

6. Temporisateur suivant la revendication 2, caractérisé en ce que le boitier de règlage (2) branché temporairement comporte: des roues codeuses (12) sur lesquelles on affiche préalablement la valeur du talon à introduire dans la mémoire du temporisateur, un ensemble de bouton-poussoirs (17, 19) de commande de chargement, une visualisation (13) des temps contenus en mémoire et un commutateur de sélection du pas à visualiser (14).

**Patentansprüche**

1. Zeitsteuergerät mit einer die Adaption der Steuerung einer Schweißanlage gestattenden, einen Speicher (6) aufweisenden elektronischen Karte (5), wobei der Speicher vermittels eines Reguliergerätes (2) mit den Werten der einen Schweißvorgang betreffenden Parameter gespeist wird, dadurch gekennzeichnet, daß das Reguliergerät zeitweilig an das Zeitsteuergerät (1) angeschlossen ist, und daß dieser Speicher (6) mit einem die Schweißstellen speichernden Zähler während der Einspeisung der Parameter in der »Zählstellung«, und sodann in der »Abrechnungsstellung« zusammenwirkt, die von demjenigen Schweißschritt ab erfolgt, die der für die Elektrode in Anbetracht ihres Verschleißes zulässigen Anzahl von Schweißungen entspricht.

2. Zeitsteuergerät nach Anspruch 1, dadurch gekennzeichnet, daß die Parameter eines Schweißvorganges folgende sind: Anlegen; Schweißdauer; Haltezeit; Totzeit; Wert des Schweißabschnitts.

3. Zeitsteuergerät nach Anspruch 2, dadurch gekennzeichnet, daß die Zählung des Schweißabschnitts das Aufleuchten einer Signallampe (135) bewirkt, das das Auswechseln von Elektroden oder die Übermittlung einer Meldung an ein vorgewähltes Verarbeitungssystem fordert.

4. Zeitsteuergerät nach Anspruch 3, dadurch gekennzeichnet, daß es mit Mitteln versehen ist, welche das Lesen am Zählerausgang gestatten.

5. Zeitsteuergerät nach Anspruch 4, dadurch gekennzeichnet, daß es am Ausgang des Zählers (130) mit Mitteln (160, 161) zum Wählen verschiedener Schweißabschnittswerte versehen ist, die eine automatische Änderung der Schweißstromstärke gestatten.

6. Zeitsteuergerät nach Anspruch 2, dadurch gekennzeichnet, daß das zeitweilig angeschlossene Reguliergerät (2) umfaßt: Kodierräder (12), auf denen zuvor den in den Speicher des Zeitsteuergerätes einzuspeisenden Schweißabschnittswert einstellt, eine Gruppe von Druckknöpfen (17, 19) zur Steuerung der Beladung, Anzeigemittel (13) zur sichtbaren Anzeige der im Speicher gespeicherten Zeiten, und einen Wählschalter zum Wählen der sichtbar anzuzeigenden Schweißschritte.

**Claims**

1. A timing device provided with an electronic card (5) allowing the adaptation of the control of a welding machine, comprising a memory (6) which is loaded with the values of the parameters related to a welding operation through the intermediary of a regulating box (2), characterized in that said box is temporarily connected to the timing device (1), and in that said memory (6) is associated to a counter memorized with welding spots in the »counting« position during the injection of the parameters, when in the »deducting« position which occurs starting from the welding pitch corresponding to the numbers of welds acceptable for the electrode on account of its wear.

2. A timing device according to claim 1, characterized in that the parameters of a welding operation are the following: approach; welding time; holding time; dead time; value of the welding section.

3. A timing device according to claim 2, characterized in that the counting of the welding section controls the lighting of a signal lamp (135) which calls for changing of electrodes or transmission of an information to a selected processing system.

4. A timing device according to claim 3, characterized in that it is provided with means allowing reading at the counter outlet.

5. A timing device according to claim 4, characterized in that it is provided, at the outlet of the counter (130), with means (160, 161) for selecting various welding section values, allowing automatic variation of the welding current intensity.

6. A timing device according to claim 2, characterized in that the regulating box (2) which is temporarily connected comprises: coding wheels (12) on which the welding section value to be introduced into the memory of the timing device is indicated, a group of push-buttons (17, 19) controlling the loading, means for visualizing (13) the time values contained in the memory, and a switch for selecting the pitch to be visualized.

FIG.1

FIG.5

0 043 769

FIG_2

0 043 769

FIG_ 3

11

FIG_4